(19) Europäisches Patentamt
European Patent Office
Office européen des brevets

(11) **EP 2 118 156 B1**

(12) **EUROPÄISCHE PATENTSCHRIFT**

(45) Veröffentlichungstag und Bekanntmachung des Hinweises auf die Patenterteilung:
**03.11.2010   Patentblatt 2010/44**

(21) Anmeldenummer: **08708728.4**

(22) Anmeldetag: **06.02.2008**

(51) Int Cl.:
*C08F 230/02* *(2006.01)*     *C08F 222/04* *(2006.01)*
*C08F 210/00* *(2006.01)*     *C09K 8/528* *(2006.01)*
*C02F 5/14* *(2006.01)*     *C08F 8/12* *(2006.01)*
*C08F 8/44* *(2006.01)*     *C09K 8/12* *(2006.01)*

(86) Internationale Anmeldenummer:
**PCT/EP2008/051431**

(87) Internationale Veröffentlichungsnummer:
**WO 2008/095945 (14.08.2008 Gazette 2008/33)**

(54) **VERFAHREN UND POLYMER ZUR VERMEIDUNG VON BA/SR-KESSELSTEIN MIT EINGEBAUTER NACHWEISBARER PHOSPHORFUNKTIONALITÄT**

PROCESS AND POLYMER FOR PREVENTING BA/SR SCALE WITH INCORPORATED DETECTABLE PHOSPHORUS FUNCTIONALITY

PROCÉDÉ ET POLYMÈRE PERMETTANT D'ÉVITER LES DÉPÔTS DE BA/SR AYANT UNE FONCTIONNALITÉ PHOSPHORE DÉCELABLE INTÉGRÉE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.02.2007   EP 07102056**

(43) Veröffentlichungstag der Anmeldung:
**18.11.2009   Patentblatt 2009/47**

(73) Patentinhaber: **BASF SE**
**67056 Ludwigshafen (DE)**

(72) Erfinder:
• **HERRERA TABOADA, Lidcay**
**B-8400 Oostende (BE)**
• **GUZMANN, Marcus**
**69242 Mühlhausen (DE)**
• **NEUBECKER, Karin**
**67227 Frankenthal (DE)**
• **GÖTHLICH, Alexander**
**68163 Mannheim (DE)**

(56) Entgegenhaltungen:
**EP-A- 0 276 464     EP-A- 0 468 324**
**EP-A- 0 643 081**

• **DATABASE WPI Week 197516 Derwent Publications Ltd., London, GB; AN 1975-26890W XP002481087 -& SU 423 812 A (IRKUTSK ZHDANOV UNIV) 15. November 1974 (1974-11-15)**

**Beschreibung**

Die vorliegende Erfindung betrifft Verfahren zur Herstellung phosphorhaltiger Polymere sowie Polymere erhältlich aus solchen Verfahren und Verfahren zur Vermeidung von Ba-/Sr-Kesselstein mit Hilfe der Polymere.

Um die Abscheidung von schwerlöslichen Erdalkalimetallsalzen aus wässrigen Systemen zu verringern oder zu verhindern, verwendet man in der Technik Scale-Inhibitoren. Sie werden auf verschiedenen technischen Gebieten eingesetzt, z. B. in Boilern für die Dampferzeugung, bei der destillativen Entsalzung von Meerwasser, bei der Eindampfung von Zuckersaft, bei der umgekehrten Osmose sowie bei der Öl- und Gasgewinnung beziehungsweise dem Transport. Bei der zuletzt genannten Anwendung scheiden sich beispielsweise aus dem Produktionswasser schwerlösliche anorganische Salze wie zum Beispiel Calciumcarbonat, Calciumsulfat, Bariumsulfat und Strontiumsulfat ab und bilden innerhalb der Fördereinrichtung störende Ablagerungen, die sogar zum Stillstand der Produktion führen können. Die Entstehung solcher Ablagerungen beruht auf Änderungen der Löslichkeitsparameter wie Temperatur und Druck während der Förderung oder z. B. auch durch Vermischen von Erdalkalimetallionen enthaltendem Formationswasser mit einem sulfationenreichen Meerwasser in der Formation oder innerhalb der Fördereinrichtungen. Ablagerungen innerhalb der Formation beeinträchtigen die Permeabilität der Lagerstätte und vermindern damit die Produktivität von Öl und Gas.

Als Scale-Inhibitoren verwendet man beispielsweise Polyacrylsäure, Polymaleinsäure oder hydrolysierte wasserlösliche Copolymerisate aus Maleinsäureanhydrid und beispielsweise $C_2$-$C_{12}$-Olefinen. Bei der Öl- und Gasförderung kann man beispielsweise den in Wasser gelösten Scale-Inhibitor in einer Injektions- oder Produktionsbohrung oder direkt in die Förderleitung mittels einer Sonde in den Unterteil der Produktionsbohrung injizieren. Hier werden üblicherweise Polycarboxylate oder Oligo-/Polyphosphate eingesetzt. Sofern die Scale-Ablagerungen in der Lagerstätte im Zuflussbereich der Produktionssonde auftreten, können diese nur durch eine Squeeze-Behandlung mit einem geeigneten Scale-Inhibitor verhindert werden. Bei einer Squeeze-Behandlung wird der gelöste Scale-Inhibitor im Überschuss praktisch als Vorrat direkt in die Formation eingebracht, um sich auf dem Formationsgestein abzulagern. Während der Förderung löst sich der Inhibitor kontinuierlich vom Formationsgestein ab. Der Gehalt an Scale-Inhibitor in Wasser, das beispielsweise zusammen mit Öl aus der Lagerstätte kommt, wird in bestimmten Zeitabständen überprüft. Erst bei einer Unterschreitung einer kritischen Konzentration an Scale-Inhibitor wird eine erneute Squeeze-Behandlung durchgeführt. Weiterhin ist es wichtig, die Komponentenzusammensetzung des Produktionswassers zu bestimmen.

Aus der US-A-4 018 702 ist die Verwendung von Umsetzungsprodukten aus Polymaleinsäureanhydrid und Aminogruppen enthaltenden Verbindungen bekannt. Geeignete Umsetzungsprodukte sind beispielsweise die Addukte von Iminodiacetat an Polymaleinsäureanhydrid sowie die Additionsprodukte von Diethanolamin oder Ethanolamin an Polymaleinsäureanhydrid. Die Wirksamkeit solcher Produkte bei der Scale-Inhibierung ist jedoch verbesserungsbedürftig.

Die Herstellung von Polymaleinsäureanhydrid durch radikalische Polymerisation von Maleinsäureanhydrid in inerten Lösungsmitteln ist beispielsweise aus GB-A-1 024 725, GB-A-1 411 063 und US-A 3 810 834 bekannt.

Gemäß dem aus der US-A 4 818 795 bekannten Verfahren wird Maleinsäureanhydrid in aromatischen Kohlenwasserstoffen bei Temperaturen von 60 bis 200 ˚C in Gegenwart von 1 bis 20 Gew.-%, bezogen auf Maleinsäureanhydrid, an Peroxyestern polymerisiert. Man erhält Polymaleinsäureanhydride mit einem geringen Restmonomergehalt.

Aus der EP-A 0 264 627 und der EP-B 0 276 464 sind Verfahren zur Herstellung von Maleinsäureanhydrideinheiten enthaltenden Copolymerisaten bekannt. Die Copolymerisation erfolgt in Gegenwart von Peroxyestern als Katalysator in aromatischen Kohlenwasserstoffen, z. B. Toluol, Xylol, Ethylbenzol und Isopropylbenzol. Als Comonomere kann man beispielsweise Vinylester von gesättigten $C_1$-$C_4$-Carbonsäuren, ethylenisch ungesättigten $C_3$-$C_5$-Carbonsäuren und mindestens zwei monoethylenisch ungesättigten Doppelbindungen enthaltende Verbindungen einsetzen. Die Maleinsäureanhydrideinheiten enthalten Polymerisate, die durch radikalische Polymerisation in aromatischen Lösemitteln hergestellt werden und erhebliche Mengen an Lösemitteln in gebundener Form enthalten.

Aus der EP-B 0 009 171 ist die Herstellung von Polymaleinsäureanhydrid durch Polymerisieren von Maleinsäureanhydrid in Acetanhydrid mit Wasserstoffperoxid als Katalysator bekannt.

WO-A 97/16464 beschreibt die Verwendung von Polycarbonsäurehalbamiden als Scale-I nhibitoren.

EP-B 479 465 beschreibt die Hemmung der Abscheidung von Bariumkesselstein durch Zugabe von Phosphonaten.

Mischungen polymerer Scale-Inhibitoren mit Phosphonaten werden in US-A 4 874 535 beschrieben.

Um die Wirkung des Scale-Inhibitors dauerhaft aufrechtzuerhalten, ist es erforderlich, dessen Anwesenheit und Konzentration entweder kontinuierlich oder diskontinuierlich zu überwachen.

Dies kann zum einen dadurch erfolgen, dass die Konzentration des Inhibitors selbst mit Hilfe gängiger Detektions- und Analyseverfahren bestimmt wird.

Darüber hinaus wurden jedoch auch Scale-Inhibitoren entwickelt, die eine "Sonde" aufweisen, wobei deren Konzentrationsbestimmung indirekt auf den Gehalt des Scale-Inhibitors schließen lässt.

In WO-A 2005/000747 werden beispielsweise polymere Scale-Inhibitoren vorgeschlagen, bei deren Bildung ein ungesättigtes Monomer eingesetzt wird, welches als Substituenten einen aromatischen Ring aufweist, der eine entsprechende Detektion ermöglicht.

Analog wird in US-B 6 995 120 der Einsatz von ethylenisch ungesättigten Vinylsulfonatmonomeren vorgeschlagen.

In WO-A 2005/001241 werden polymere Scale-Inhibitoren beschrieben, bei deren Herstellung Vinylphosphonsäuren als Monomere eingesetzt werden können.

Schließlich werden in der WO-A-2008/077829 Polymere auf Basis von Maleinsäureanhydrid und iso-Buten beschrieben, die mit einem phosphorhaltigen Amin umgesetzt werden, so dass deren Gehalt in einer Flüssigkeitsprobe über den im Polymer vorhandenen Phosphor bestimmt werden können.

Wie bereits ausgeführt wurde, finden Scale-Inhibitoren für unterschiedlichste Systeme Anwendung. Diesen ist jedoch allen gemein, dass die Abscheidung insbesondere schwerlöslicher Erdalkalimetallsalze vermieden werden soll. In diesem Zusammenhang wird häufig auch der Begriff Kesselstein verwendet. Hierbei ist insbesondere die Ausfällung von Sulfaten und/oder Carbonaten der Erdalkalimetalle Barium und Strontium (Ba-/Sr-Kesselstein) problematisch.

Trotz zahlreicher Scale-Inhibitoren, die im Stand der Technik bekannt sind und die eine "Sonde" aufweisen, was deren Gehaltsbestimmung erleichtert, besteht nach wie vor ein Bedarf an verbesserten Scale-Inhibitoren sowie Verfahren zu deren Herstellung, die zur Vermeidung von Ba-/Sr-Kesselstein dienen können.

Eine Aufgabe der vorliegenden Erfindung liegt somit darin, Verbindungen mit verbesserten Eigenschaften und verbesserte Herstellverfahren für die Vermeidung von Ba-/Sr-Kesselstein zur Verfügung zu stellen, die mit Hilfe einer "Sonde" leicht detektierbar sind.

Diese Aufgabe wird gelöst durch ein Verfahren zur Herstellung eines phosphorhaltigen Polymers die Schritte enthaltend

(i) Copolymerisieren von zumindest

(a) monoethylenisch ungesättigten Dicarbonsäureanhydriden mit 4 bis 6 C-Atomen mit

(b) Olefinen der Formel $CH_2 = C(R^1)R^2$, wobei
$R^1$ H oder $CH_3$ und
$R^2$ H, $CH_3$, $C_2H_5$ oder Phenyl ist, und

(c) phosphorhaltigen Ethenderivaten der Formel $CH_2=CHX$, wobei X ein Phosphorsäurerest, ein Phosphonsäurerest, ein phosphorige Säure-Rest oder ein entsprechendes Salz oder entsprechender Ester ist;

(ii) zumindest teilweise Ringöffnung der verbleibenden Anhydridgruppen.

Es wurde nämlich gefunden, dass das oben beschriebene Herstellverfahren zu phosphorhaltigen Polymeren führt, die zum einen gute Eigenschaften zur Vermeidung von Ba-/Sr-Kesselstein aufweisen, was insbesondere auf die Monomeren Anhydrid (Komponente (a)) und Olefin (Komponente (b)) zurückzuführen ist, und zum anderen aufgrund des Vorhandenseins einer phosphorhaltigen Gruppe aufgrund des Ethenderivat-Monomers (Komponente (c)) leicht detektiert werden können. Hierbei war insbesondere überraschend, dass das Polymer aus den Komponenten (a) und (b), welches bereits bekanntermaßen gute Eigenschaften zur Vermeidung von Ba-/Sr-Kessetstein besitzt, durch die Komponente (c) bei der Herstellung des phosphorhaltigen Polymers nicht negativ in seinen Eigenschaften als Scale-Inhibitor beeinträchtigt wird. Solche Eigenschaften des Polymers ohne Verwendung der Komponenten (c) bei dessen Herstellung sind beispielsweise beschrieben in GB-A 2 172 278 und in der internationalen Anmeldung mit der Anmeldenummer PCT/EP2006/063340.

Weiterhin wird die Aufgabe gelöst durch ein phosphorhaltiges Polymer erhältlich aus dem oben beschriebenen Verfahren.

In Schritt (i) erfolgt die Copolymerisierung von zumindest den Komponenten (a), (b) und (c). Es können ebenso nur die Komponenten (a), (b) und (c) unter Bildung eines Terpolymers eingesetzt werden.

Die Komponente (a) kann aus einem der Anhydride oder mehreren verschiedenen Anhydriden bestehen. Ebenso kann die Komponente (b) aus einem der Olefine oder mehreren Olefinen bestehen. Ebenso kann die Komponente (c) aus einem phosphorhaltigen Ethenderivat oder mehreren dieser Derivate bestehen.

Das in Schritt (i) gebildete Polymer kann auch unter Zusatz weiterer Monomere hergestellt werden. So können Vernetzer eingesetzt werden, die mindestens zwei monoethylenisch ungesättigte Doppelbindungen im Molekül aufweisen. Der Anteil solcher Vernetzer kann im Bereich von 0,001 bis 5 Gew.-%, bezogen auf die Summe der Gewichte der Komponenten (a), (b) und (c), betragen.

Das Molverhältnis von Komponente (a) zu Komponente (b) liegt vorzugsweise im Bereich von 20 : 1 bis 1 : 5. Weiterhin bevorzugt liegt das Verhältnis im Bereich von 10 : 1 bis 1 : 3. Ganz besonders bevorzugt beträgt das Verhältnis 3 : 2.

Die Menge der Komponenten (c) beträgt vorzugsweise 0,01 bis 15 Gew.-%, mehr bevorzugt 0,1 bis 10 Gew.-%, insbesondere 0,5 bis 5 Gew.-%, bezogen auf Gesamtmenge des phosphorhaltigen Polymers.

Verfahren zur Herstellung von Polymeren in Schritt (i) des erfindungsgemäßen Verfahrens sind bekannt. Diese finden üblicherweise in inerten organischen Lösungsmitteln statt, in denen die entstandenen Polymere löslich sind und darin nach Abschluss der Polymerisation häufig in Mengen von über 10 Gew.-% vorliegen können. Die Reaktionen finden dabei üblicherweise in Gegenwart von Radikale bildenden Polymerisationsinitiatoren statt. Weiterhin können Kettenüberträger eingesetzt werden.

Weiterhin können Schutzkolloide eingesetzt werden. Diese können beispielsweise im Bereich von 0,05 bis 4 Gew.%, bezogen auf die bei der Polymerisation eingesetzten Monomeren, vorhanden sein. Setzt man als Schutzkolloide Polymerisate von $C_1$- bis $C_{12}$-Alkylvinylether ein, so besitzen diese vorzugsweise K-Werte von 10 bis 200 (gemessen nach H. Fikentscher in Cyclohexanon bei einer Polymerisationskonzentration von 1 Gew.-% und 25 ˚C).

Als Komponente (a) kommen Anhydride monoethylenisch ungesättigter Dicarbonsäuren mit 4 bis 6 C-Atomen in Betracht. Beispielsweise sind dies Maleinsäureanhydrid, Itaconsäureanhydrid, Citraconsäureanhydrid, Methylenmaleinsäureanhydrid sowie Mischungen der genannten Verbindungen.

Vorzugsweise setzt man Maleinsäureanhydrid (MSA) als Monomer der Komponente (a) ein.

Monomeren der Komponente (b) sind Olefine der Formel $H_2C = C(R^1)R^2$, in denen $R^1 = H$, $CH_3$ und $R^2 = H$, $CH_3$, $C_2H_5$ oder Phenyl ist.

Bevorzugte Verbindungen dieser Art sind Ethylen, Propylen, Isobutylen, Buten-1, Styrol und 2-Phenylpropen.

Aus dieser Gruppe von Monomeren wird vorzugsweise Isobuten als Monomer der Komponenten (b) eingesetzt.

Monomeren der Komponente (c) sind phosphorhaltige Ethenderivate der Formel $CH_2=CHX$, wobei X ein Phosphorsäurerest, ein Phosphonsäurerest, ein phosphorige Säure-Rest oder ein entsprechendes Salz oder entsprechender Ester ist.

Ein geeignetes Salz X ist insbesondere ein Alkalimetallsalz, wie ein Natrium- oder Kaliumsalz oder ein Ammoniumsalz, wie ein unsubstituiertes Ammonium-, Ethanolammonium-, Triethanolammonium- oder ein Morpholiniumsalz.

Geeignete Ester sind insbesondere $C_1$- bis $C_6$-Alkylester, insbesondere Methyl-, Ethyl-, n-Propyl- oder i-Propylester.

Vorzugsweise handelt es sich bei X um eine Phosphonsäure oder ein Salz oder Ester davon. Insbesondere sind Vinylphosphonsäure (VPA) sowie deren Ethyl- oder Methylester zu nennen.

Wie oben ausgeführt, können neben den Komponenten (a), (b) und (c) weitere Monomere bei der Copolymerisation in Schritt (i) des erfindungsgemäßen Verfahrens beteiligt sein. Hier sind insbesondere Vernetzer zu nennen, die mindestens zwei nicht konjugierte monoethylenisch ungesättigte Bindungen im Molekül aufweisen.

Geeignete Vernetzer dieser Art sind beispielsweise Diacrylate oder Dimethylacrylate von mindestens zweiwertigen gesättigten Alkoholen, z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als zwei OH-Gruppen können als Vernetzer eingesetzt werden. Dies sind z. B. Trimethylolpropantriacrylat oder Trimethylolpropantrimethacrylat.

Eine weitere Klasse von Vernetzern sind Diacrylate oder Dimethacrylate von Polyethylenglykolen oder Polypropylenglykolen mit Molekulargewichten von jeweils 200 bis 9000. Polyethylenglykole beziehungsweise Polypropylenglykole, die für die Herstellung der Diacrylate oder Dimethacrylate verwendet werden können, haben vorzugsweise ein Molekulargewicht von jeweils 400 bis 2000. Außer den Homopolymerisaten des Ethylenoxids beziehungsweise Propylenoxids können auch Blockcopolymerisate aus Ethylenoxid und Propylenoxid oder Copolymerisate aus Ethylenoxid und Propylenoxid eingesetzt werden, bei denen die Ethylenoxid und Propylenoxid-Einheiten statistisch verteilt enthalten sind. Auch die Oligomeren des Ethylenoxids beziehungsweise Propylenoxids sind für die Herstellung der Vernetzer geeignet, z. B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich außerdem Vinylester von ethylenisch ungesättigten $C_3$- bis $C_6$-Carbonsäuren, z. B. Vinylacrylat, Vinylmethacrylat oder Vinylitaconat. Als Vernetzer geeignet sind außerdem Vinylester mit mindestens zwei Carboxylgruppen enthaltenden gesättigten Carbonsäuren sowie Di- und Polyvinylether von mindestens zweiwertigen Alkoholen, wie z. B. Adipinsäuredivinylester, Butandioldivinylether und Trimethylolpropantrivinylether. Weitere Vernetzer sind Allylester ethylenisch ungesättigter Carbonsäuren, wie z. B. Allylacrylat und Allylmethacrylat, Allylether von mehrwertigen Alkoholen, z. B. Pentarose.

Außerdem eignen sich als Vernetzer Methylenbisacrylamid, Methylenbismethacrylamid, Divinylethylenharnstoff, Divinylpropylenharnstoff, Divinylbenzol, Divinyldioxan, Tetraallylsilan und Tetravinylsilan.

Die Vernetzer können entweder allein oder in Form von Gemischen bei der Copolymerisation eingesetzt werden. Falls man Vernetzer mitverwendet, werden sie vorzugsweise in einer Menge von 0,2 bis 0,5 Gew.-%, bezogen auf die Monomermischung aus (a), (b) und (c), eingesetzt.

Die Copolymerisate sind in organischen Lösemitteln löslich und liegen darin nach Abschluss der Polymerisation typischerweise in einer Menge von mindestens 10 Gew.-% vor.

Als organische Lösemittel werden typischerweise inerte organische Lösemittel, wie sie im Stand der Technik für die Herstellung der oben genannten Verbindungen bekannt sind, eingesetzt.

Vorzugsweise verwendet man aromatische Lösemittel wie Benzol, Toluol, o-Xylol, m-Xylol, p-Xylol, Ethylbenzol, Cumol sowie Mischungen der genannten aromatischen Lösemittel in einem geeigneten Verhältnis. Für die Praxis haben insbesondere die in der Technik üblichen Gemische von Aromaten Bedeutung, zum Beispiel Mischungen der Xylole.

Die Copolymerisation der Komponenten (a), (b) und (c) sowie gegebenenfalls weiterer Monomeren gemäß Schritt (i) des erfindungsgemäßen Verfahrens erfolgt typischerweise in Gegenwart von Radikale bildenden Polymerisationsinitiatoren. Für die Herstellung geeignete Initiatoren sind beispielsweise aus EP-B 0 106 991 bekannt. Sie werden typischerweise in Mengen von 0,01 bis 20, vorzugsweise 0,05 bis 10 Gew.-%, bezogen auf die bei der Polymerisation eingesetzten Monomeren, eingesetzt. Die Copolymerisation kann auch durch Einwirkung von ultravioletter Strahlung, gegebenenfalls in Gegenwart von UV-Initiatoren, durchgeführt werden. Solche Initiatoren sind beispielsweise Verbindungen, wie Benzoin und Benzoinether, $\alpha$-Methylbenzoin oder $\alpha$-Phenylbenzoin. Auch so genannte Triplett-Sensibilisatoren, wie Benzyldiketale, können verwendet werden. Als UV-Strahlungsquellen dienen beispielsweise neben energiereichen UV-Lampen, wie Kohlebogenlampen, Quecksilberdampflampen oder Xenonlampen, auch UV-arme Lichtquellen, wie Leuchtstoffröhren mit hohem Blauanteil.

Sollen die Copolymerisate einen niedrigen K-Wert aufweisen, wird die Copolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure und Butenole. Falls die Copolymerisation in Gegenwart von Reglern durchgeführt wird, benötigt man davon in der Regel 0,05 bis 20 Gew.-%, bezogen auf die bei der Polymerisation eingesetzten Monomeren.

Geeignete Schutzkolloide sind Polyalkylvinylether mit 1 bis 12 C-Atomen im Alkylrest. Die K-Werte der Polyalkylvinylether betragen typischerweise 10 bis 200, vorzugsweise 20 bis 100 (gemessen in 1 %iger Lösung in Cyclohexanon bei 25 ˚C).

Geeignete Polyalkylvinylether sind beispielsweise Polymethylvinylether, Polyethylvinylether, Polypropylvinylether, Polyisopropylvinylether, Polybutylvinylether, Polyisobutylvinylether und Polyhydroxybutylvinylether sowie Mischungen der genannten Polyalkylvinylether. Vorzugsweise verwendet man als Schutzkolloid Polyethylvinylether. Die zugesetzte Menge an Schutzkolloid beträgt üblicherweise 0,05 bis 4, vorzugsweise 0,1 bis 2 Gew.-%, bezogen auf die bei der Polymerisation jeweils eingesetzten Monomeren.

Die Polymerisation in Schritt (i) des erfindungsgemäßen Verfahrens erfolgt üblicherweise bei Temperaturen von 30 ˚C bis 200 ˚C, vorzugsweise 50 ˚C bis 160 ˚C. Niedrigere Polymerisationstemperaturen werden zur Herstellung schwach vernetzter und hochmolekularer Copolymerisate angewendet, während man hohe Polymerisationstemperaturen zur Herstellung von Polymerisaten mit niedrigen K-Werten wählt. Die Molekulargewichte hängen außerdem noch von der Menge der jeweils eingesetzten Polymerisationsinitiatoren ab. Die Copolymerisation kann bei Normaldruck, bei vermindertem Druck sowie - insbesondere bei der Copolymerisation von Ethylen, Propylen und Isobuten - unter erhöhtem Druck durchgeführt werden, z. B. bei Drücken von 1 bis 200 bar.

Um schwach vernetzte und besonders hochmolekulare Copolymerisate herzustellen, werden das organische Lösemittel, das gegebenenfalls vorhandene Schutzkolloid und die Monomeren im Reaktor vorgelegt und im Stickstoffstrom bei der gewünschten Polymerisationstemperatur durch langsames kontinuierliches und portionsweises Zugeben des Initiators polymerisiert. Der Initiator wird dabei in der Weise dosiert, dass die gebildete Reaktionswärme kontrolliert abgeführt werden kann. Das Polymer kann als Suspension in Form von feinkörnigen Teilchen anfallen und durch Trocknen als Pulver isoliert werden oder in Lösung bleiben (Fällungs- oder Lösungspolymerisation).

Um mittel- und niedrigmolekulare Copolymerisate herzustellen, werden das Lösungsmittel, das gegebenenfalls vorhandene Schutzkolloid und das ethylenisch ungesättigte Dicarbonsäureanhydrid im Reaktor vorgelegt, im Stickstoffstrom auf die gewünschte Polymerisationstemperatur erhitzt und dann das Olefin sowie das phosphorhaltige Ethen-Derivat über einen längeren Zeitraum, bevorzugt innerhalb von 2 bis 8 Stunden, kontinuierlich oder portionsweise zudosiert. Nach Ende der Copolymerisation kann das Polymer von dem organischen Lösemittel getrennt werden.

Die Komponente (c) kann auch gemeinsam mit Komponente (a) vorgelegt werden. Es ist ebenfalls möglich, einen Teil der Komponente (c) vorzulegen und den verbleibenden Rest zuzugeben.

Das aus Schritt (i) erhaltene Polymer wird in Schritt (ii) einer zumindest teilweisen Ringöffnung der verbleibenden Anhydridgruppen unterworfen.

Das phosphorhaltige Polymer wird also nicht als solches eingesetzt, sondern es erfolgt zumindest eine teilweise Ringöffnung der nicht umgesetzten Anhydridgruppen. Vorzugsweise findet die Ringöffnung der verbleibenden Anhydridgruppen vollständig statt. Dies kann in einfacher Weise durch Umsetzung mit einer Säure (unter Ausbildung von Carbonsäurefunktionen) oder einer Base unter Salzbildung erfolgen. Hierbei ist die Polymersalzbildung bevorzugt.

Als Säuren können beispielsweise Salze, Schwefelsäure, Phosphorsäure, Alkansulfonsäuren eingesetzt werden.

Das phosphorhaltige Polymer in Form seines Salzes ist besonders deshalb vorteilhaft, weil ein solches Polymersalz in wässriger Lösung auch bei Verdünnungen mit beispielsweise Meerwasser keine Ausfällungen hervorruft.

Vorzugsweise erfolgt die Ringöffnung in einer wässrigen, eine Base enthaltenden Lösung, die dann als solche oder gegebenenfalls nach Verdünnung eingesetzt werden kann. Geeignete Basen sind Natronlauge, Kalilauge, Ammoniak oder Amine, wie Ethanolamin, Diethanolamin, Triethanolamin oder auch Morpholin.

Vorzugsweise überführt man das phosphorhaltige Polymer direkt aus der erhaltenen Polymersuspension in eine wässrige Salzlösung. Hierbei wird der Copolymerisatsuspension zunächst Wasser zugesetzt und dann durch Einleiten von Wasserdampf das Lösemittel gegebenenfalls als azeotropes Gemisch mit Wasser abdestilliert.

Nachdem man das inerte organische Lösemittel abdestilliert hat, werden die Anhydridgruppen zumindest teilweise geöffnet, wie dies oben ausgeführt wurde. Dies kann beispielsweise durch Zugabe von Basen, beispielsweise von Natronlauge, Kalilauge, Ammoniak oder Aminen, wie Ethanolamin, Diethanolamin, Triethanolamin oder auch Morpholin, in das Polymersalz überführt oder durch Zugabe von Säure in die Säureform überführt werden.

Das erfindungsgemäße Verfahren zur Herstellung eines phosphorhaltigen Polymers wird üblicherweise in Rührkesseln durchgeführt, die mit einem Anker-, Blatt-, Impeller- oder Mehrstufenimpulsgegenstromrührer ausgestattet sind. Besonders geeignet sind Apparaturen, die nach der Umsetzung die direkte Isolierung des Feststoffes gestatten, wie z. B. Schaufeltrockner. Die erhaltenen Polymerisat-Suspensionen können direkt in Verdampfern wie beispielsweise Bandtrocknern, Schaufeltrocknern, Sprühtrocknern oder Wirbelbetttrocknern getrocknet werden. Man kann aber auch durch Filtrieren oder Zentrifugieren die Hauptmenge des inerten Lösemittels abtrennen und gegebenenfalls durch Nachwaschen mit frischem Lösungsmittel Reste von Initiatoren, Monomeren und Schutzkolloide - sofern vorhanden - entfernen und die Copolymerisate erst danach trocknen. Auch in einem solchen Fall erfolgt anschließend die zumindest teilweise Öffnung der Anhydridgruppen.

Bevorzugt sind phosphorhaltige Polymersalze, die K-Werte von 5 bis 40 (gemessen nach H. Fikentscher in 1 gew.-%iger wässriger Lösung der Copolymerisate bei pH 8 und 25 °C) haben.

Die vorzugsweise wasserlöslichen phosphorhaltigen Copolymerisate haben typischerweise K-Werte von 8 bis 300, vorzugsweise 10 bis 250. Die K-Werte der Copolymerisate können nach H. Fikentscher, Cellulose-Chemie, Band 3, 48-64 und 71-74 (1932) in wässriger Lösung bei einem pH-Wert von 8, einer Temperatur von 25 °C und einer Polymerkonzentration des Natriumsalzes der Copolymerisate von 1 Gew.-% bestimmt werden.

Das phosphorhaltige Polymer weist vorzugsweise vor Öffnung der Anhydridfunktionen eine mittlere Molmasse $M_w$ auf, die im Bereich von 200 bis 25000 g/mol liegt. Vorzugsweise liegt $M_w$ im Bereich von 1000 bis 15000 g/mol, weiterhin bevorzugt im Bereich von 2000 bis 10000 g/mol, insbesondere bevorzugt im Bereich von 2500 bis 8000 g/mol.

Ein weiterer Gegenstand der vorliegenden Erfindung ist ein phosphorhaltiges Polymer erhältlich aus dem erfindungsgemäßen Verfahren zu dessen Herstellung.

Das erfindungsgemäße phosphorhaltige Polymer kann zur Vermeidung von Ba-/Sr-Kesselstein dienen.

Ein weiterer Gegenstand der vorliegenden Erfindung ist daher ein Verfahren zur Vermeidung von Ba-/Sr-Kesselstein den Schritt enthaltend

(a) Zuführen eines erfindungsgemäßen phosphorhaltigen Polymers zu einer Flüssigkeit, die geeignet ist, Ba-/Sr-Kesselstein abzuscheiden in einer Flüssigkeitsumgebung.

Hierbei wird vorzugsweise das phosphorhaltige Polymer als Salz in einer wässrigen Lösung zugeführt.

Das erfindungsgemäße Verfahren dient der Vermeidung von Ba-/Sr-Kesselstein (Inhibierung der Ausfällung von Ba-/Sr-Kesselstein). Ba-/Sr-Kesselstein wird von zumindest einem der Salze $BaSO_4$, $SrSO_4$, $BaCO_3$ und $SrCO_3$ verursacht. Weiterhin können weitere schwerlösliche Salze der Erdalkalimetalle und gegebenenfalls Oxide anderer Metalle in der Flüssigkeit vorhanden sein. Solche Salze sind z. B. Calciumcarbonat, Calciumsulfat, Calciumsilikate, Magnesiumsilikate, Magnesiumhydroxid und Magnesiumcarbonat sowie beispielsweise Eisen(III)-oxid.

Im Rahmen der vorliegenden Erfindung liegt bereits dann eine Vermeidung beziehungsweise Inhibierung von Ba-/Sr-Kesselstein vor, wenn die Ausbildung einer Ausfällung von zumindest einem der Salze $BaSO_4$, $SrSO_4$, $BaCO_3$, $SrCO_3$ zumindest teilweise vermieden oder verzögert wird.

Das im erfindungsgemäßen Verfahren eingesetzte Polymer kann die Bildung von Kristallen der oben genannten Salze in einer Flüssigkeit, insbesondere in wasserführenden Systemen, verringern oder verhindern. Zusätzlich oder alternativ dazu können diese auch die Bildung von Niederschlägen solcher Salze beeinflussen. Auf diese Weise wird die Flüssigkeitsumgebung, beispielsweise ein Kessel, eine Rohrleitung, ein Druckbehälter, aber auch eine Gesteinsformation oder Produktions- und/oder Injektionsbohrlöcher für die Erdöl- oder Erdgasförderung und Lagertanks oder Apparate in der Ölproduktion, von Ausfällungen frei gehalten. Außerdem kann dadurch die Korrosionsneigung, insbesondere die Gefahr von Lochfraßkorrosion, entscheidend verringert werden. Durch das erfindungsgemäße Verfahren kann die Lebensdauer von Geräten oder Anlagen erhöht werden. Die Stillstandzeiten und Kosten zur Reinigung von Anlagenteilen oder Geräten können durch das erfindungsgemäße Verfahren erheblich reduziert werden.

Daher ist das Verfahren besonders geeignet, wenn es sich bei der Flüssigkeit um eine solche handelt, die Wasser und/oder Erdöl und/oder Erdgas enthält. Insbesondere stellt die Flüssigkeit Wasser dar.

Weiterhin bevorzugt dient die Flüssigkeitsumgebung, wie beispielsweise ein Kessel, eine Rohrleitung, ein Druckbehälter, eine Gesteinsformation oder ein Produktions- und/oder Injektionsbohrloch für die Erdöl- oder Erdgasförderung, zum Aufbewahren, Erhitzen oder Abkühlen, Transport, Fördern der Flüssigkeit oder als Lagerstätte der Flüssigkeit.

Die in der betreffenden Flüssigkeitsumgebung vorhandene Flüssigkeit enthält das Polymer nach dem erfindungsgemäßen Verfahren üblicherweise in unterstöchiometrischer Menge. Hierbei sind Konzentrationen von bis etwa 1000 ppm üblich. Überraschenderweise wurde gefunden, dass besonders gute Resultate erzielt werden konnten, wenn das Polymersalz derart zugeführt wird, dass es eine Konzentration in der Flüssigkeit von höchstens 250 ppm, mehr bevorzugt höchstens 100 ppm, weiterhin mehr bevorzugt höchstens 50 ppm, insbesondere höchstens 25 ppm, bezogen auf das Gewicht des Polymers und der Flüssigkeit, aufweist. Eine Mindestkonzentration liegt hier bei typischerweise 0,01 ppm, vorzugsweise 0,1 ppm, mehr bevorzugt 0,5 ppm, weiter mehr bevorzugt bei 1 ppm, insbesondere bei 5 ppm, bezogen auf das Gewicht des Polymers und der Flüssigkeit.

Das erfindungsgemäße Verfahren zur Vermeidung von Ba-/Sr-Kesselstein wird vorzugsweise bei Flüssigkeitstemperaturen unter 150 ˚C durchgeführt. Vorzugsweise liegt die Temperatur mindestens bei Raumtemperatur, mehr bevorzugt über 50 ˚C. Typische Hydrothermalbedingungen ergeben eine Temperatur von etwa 80 ˚C.

Das erfindungsgemäße Polymer eignet sich daher insbesondere als Scale-Inhibitor bei der oben beschriebenen Öl- und Gasgewinnung sowie dem Transport.

Das phosphorhaltige erfindungsgemäße Polymer kann beispielsweise am unteren Ende eines Bohrloches dosiert werden. Hierzu kann eine Sonde verwendet werden. Bevorzugt wird das phosphorhaltige Polymer zusammen mit dem Injektionswasser in die Gesteinsformation verpresst. Weiterhin bevorzugt wird das Polymer durch die Produktionsbohrung in eine Gesteinsformation verpresst (Squeeze-Treatment).

Weiterhin kann das erfindungsgemäße Verfahren zur Vermeidung von Ba-/Sr-Kesselstein Schritte enthalten, die die Konzentrationsbestimmung des phosphorhaltigen Polymers betreffen.

Daher enthält das erfindungsgemäße Verfahren zur Vermeidung von Ba-/Sr-Kesselstein vorzugsweise weiterhin die Schritte

(b) Entnahme einer Probe aus der Flüssigkeitsumgebung das phosphorhaltige Polymer enthaltend und

(c) Bestimmen des Phosphorgehaltes der Probe, gegebenenfalls nach Derivatisierung des phosphorhaltigen Polymers.

Bei der Derivatisierung kann es sich beispielsweise um die Oxidation des Phosphors in dem phosphorhaltigen Polymer handeln. Darüber hinaus kann zusätzlich oder alternativ eine Hydrolyse erfolgen.

Zum einen kann der Phosphorgehalt über eine induktiv gekoppelte Plasma-AtomEmissionsspektrometrie (ICP-AES) ermittelt werden, wobei dieser Gehalt dem Anteil an phosphorhaltigem Polymer entspricht.

Darüber hinaus existiert beispielsweise die Möglichkeit, den Phosphorgehalt mit Hilfe eines Molybdän-Blau-Testes zu ermitteln.

Dem Fachmann sind prinzipiell Methoden der Phosphorgehaltsbestimmung bekannt.

Sofern der Phosphor in Form eines Phosphonats vorliegt, kann es, wie oben ausgeführt, zweckmäßig sein, diesen beispielsweise mit Hilfe der Hach Persulfat/Säure Oxidationsmethode in ortho-Phosphat zu überführen. Typischerweise geht jedoch eine Probenvorbehandlung dergestalt voraus, dass störende Ionen vorher entfernt werden. Hierbei müssen insbesondere Phosphationen vor dem Oxidationsschritt aus der Probe entfernt werden.

Weiterhin kann dem ortho-Phosphat Hach Phosver 3 Pulver zugesetzt und die resultierende Farbe in einem Spektrometer beispielsweise bei einer Wellenlänge von 890 nm gemessen werden. Die Konzentration des phosphorhaltigen Polymers in der Probe kann dann mit Hilfe von Kalibriergraden bestimmt werden. Hierbei können unterschiedliche Standards verwendet werden. Die Endbestimmung kann in Anlehnung an DIN 38405 Teil 11 erfolgen.

**Beispiele**

Beispiel 1 Herstellung erfindungsgemäßer phosphorhaltiger Polymere

Es werden die erfindungsgemäßen Polymere A, B, C und D mit Hilfe der Monomeren Maleinsäureanhydrid (MSA), Isobuten (IB) und Vinylphosphonsäure (VPS) bzw. dessen Dimethylester (VPSDM) hergestellt. Die Zusammensetzung, der Feststoffgehalt sowie der theoretische und ermittelte Phosphorgehalt sind aus der nachfolgenden Tabelle zu entnehmen.

| Polymer | Zusammensetzung in Gew.-% MSA /IB / VPS*, VPSDM** | Feststoffgehalt (%) | % P Soll | % P Messung |
|---------|---------------------------------------------------|---------------------|----------|-------------|
| A | 69,3 / 27,7 / 3,0* | 27,6 | 0,13 | 0,16 |
| B | 69,1 / 27,7 / 3,2** | 12,6 | 0,10 | 0,093 |
| C | 69,9 / 28,1 / 2,0* | 52,1 | 0,22 | 0,20 |
| D | 69,9 / 28,1 / 2,0* | 41,7 | 0,17 | 0,16 |

Der Unterschied der Polymere C und D ergibt sich aus der unterschiedlichen Zudosierungsgeschwindigkeit der Vinylphosphonsäure. Diese beträgt bei C, wie für die Polymere A und B, 5 Stunden, während für D die Zudosierung innerhalb von 3 Stunden erfolgte.

Beispiel 2 Nachweis des Phosphorgehaltes bei verschiedenen Verdünnungen

Die Polymere A, B, C und D werden mit Wasser verdünnt und der Phosphorgehalt (in ppm) mittels ICP-AES Test bestimmt. Die nachfolgende Tabelle fasst die Ergebnisse zusammen.

| Polymer | Verdünnung 1/1000 | Verdünnung 1/5000 | Verdünnung 1/25000 |
|---------|-------------------|-------------------|--------------------|
| A | 2,07 | 0,43 | 0,09 |
| B | 1,07 | 0,23 | 0,05 |
| C | 2,08 | 0,40 | 0,08 |
| D | 1,82 | 0,37 | 0,07 |

Es zeigt sich, dass der Phosphor und damit das Polymer selbst bei großer Verdünnung noch nachgewiesen und so dessen Gehalt bestimmt werden kann.

Beispiel 3 Scale Inhibition (von Barium) der Polymere A, B, C und D

Die zu testenden Polymere A, B, C und D werden in einer Konzentration von 20, 40, 60, 80 und 100 ppm in 100 ml Laborglasflaschen einpipettiert und mit jeweils 2 ml Na-Acetat Puffer bei pH 6,5 versetzt.
Dann wird eine übersättigte $BaSO_4$-Lösung in situ hergestellt, indem $Ba^{2+}$-haltiges Formationswasser 1:1 mit $SO_4^{2-}$ haltigem Meerwasser (jeweils 50 ml, auf 70 °C vortemperiert) in die o.g. 100 ml Flaschen zugegeben wurde.

Formations- und Meerwasser haben hierbei folgende Zusammensetzung:

| Forties Wasser | Formationswasser | | |
|----------------|------------------|---------|--------------------|
| Massenkonz. in g/l | Salz | M(Salz) | Molkonz. in mmol/l |
| 12,95 | $CaCl_2*2H_2O$ | 146,978 | 88,11 |
| 15,36 | $MgCl_2*6H_2O$ | 203,224 | 75,58 |
| 2,039 | $SrCl_2*6 H_2O$ | 266,544 | 7,65 |
| 0,449 | $BaCl_2*2H_2O$ | 244,208 | 1,84 |
| 45,00 | NaCl | 58,43 | 770,15 |
| | | | |
| Forties Wasser | Meerwasser | | |

Formations- und Meerwasser haben hierbei folgende Zusammensetzung:

| Forties Wasser | Formationswasser | | |
|---|---|---|---|
| Massenkonz. in g/l | Salz | M(Salz) | Molkonz. in mmol/l |
| 12,95 | $CaCl_2*2H_2O$ | 146,978 | 88,11 |
| 15,36 | $MgCl_2*6H_2O$ | 203,224 | 75,58 |
| 2,039 | $SrCl_2*6H_2O$ | 266,544 | 7,65 |
| 0,449 | $BaCl_2*2H_2O$ | 244,208 | 1,84 |
| 45,00 | NaCl | 58,43 | 770,15 |

| Forties Wasser | Meerwasser | | |
|---|---|---|---|
| Massenkonz. in g/l | Salz | M(Salz) | Molkonz. in mmol/l |
| 1,48 | KCl | 74,54 | 19,86 |
| 3,589 | $Na_2SO_4$ | 141,98 | 25,28 |
| 0,685 | $NaHCO_3$ | 83,97 | 8,16 |
| 56,3 | NaCl | 58,43 | 963,55 |

Die Lösungen werden anschließend 24 h bei 70 °C in einem Wasserbad temperiert und dann ein aliquoter Teil entnommen, über einen 0,45 µm Filter filtriert und mit einem Komplexbildner stabilisiert.

Zur Bestimmung des Ba-Gehalts der Proben mittels ICP-AES wird eine zusätzliche Kontrollprobe hergestellt. Diese enthält die maximal mögliche Konzentration an $Ba^{2+}$ und wird durch eine 1:1-Verdünnung von Formationswasser mit destilliertem Wasser hergestellt.

Die ICP-AES-Ergebnisse werden wie folgt aufbereitet:

Beispielrechnung:

$$Inhibierwirkung\ Polymer1(20\,ppm)[\%] = \frac{c_{Ba^{2+}}\left(Polymer1,\ 20\,ppm\right)*100}{c_{Ba^{2+}}\left(Control\right)}$$

$c_{Ba2+}$ (Polymer1, 20ppm) = Mittelwert (in mg/l) einer Dreifachbestimmung bei Einsatz von 20 ppm des Polymers 1.

$c_{Ba2+}$ (Control) = Mittelwert (in mg/l) aus der Dreifachbestimmung der Kontrollprobe.

Die nachfolgende Tabelle zeigt die erhaltenen Ergebnisse,

| ppm | $Ba^{2+}$-Gehalt [in mg/l] | | | | Inhibierwirkung in% |
|---|---|---|---|---|---|
| ohne Polymer | 1. Messung | 2. Messung | 3. Messung | Mittelwert | |
| Blindwert | 0,1 | 0,1 | 0,1 | 0,1 | 0 |
| Kontrolle | 59,7 | 59,7 | 59,7 | 59,7 | 100 |
| Polymer A | | | | | |
| 20 | 46,1 | 43,5 | 44,6 | 44,7 | 75 |

(fortgesetzt)

| Polymer A | | | | | |
|---|---|---|---|---|---|
| 40 | 57,7 | 59,2 | 57,4 | 58,1 | 97 |
| 60 | 59,2 | 56,7 | 55,9 | 57,3 | 96 |
| 80 | 55,0 | 59,0 | 58,2 | 57,4 | 96 |
| 100 | 55,5 | 56,0 | 56,3 | 55,9 | 94 |
| Polymer B | | | | | |
| 20 | 50,9 | 51,0 | 48,9 | 50,3 | 84 |
| 40 | 58,0 | 57,9 | 58,4 | 58,1 | 97 |
| 60 | 58,4 | 58,3 | 59,0 | 58,6 | 98 |
| 80 | 60,1 | 59,1 | 60,0 | 59,7 | 100 |
| 100 | 59,3 | 59,5 | 59,3 | 59,4 | 99 |
| Polymer C | | | | | |
| 20 | 55,2 | 54,0 | 53,5 | 54,2 | 91 |
| 40 | 58,8 | 58,8 | 58,7 | 58,8 | 98 |
| 60 | 58,6 | 59,0 | 59,3 | 59,0 | 99 |
| 80 | 59,9 | 59,1 | 59,0 | 59,3 | 99 |
| 100 | 58,8 | 59,0 | 59,2 | 59,0 | 99 |
| Polymer D | | | | | |
| 20 | 54,4 | 52,7 | 52,5 | 53,2 | 89 |
| 40 | 58,9 | 58,9 | 59,4 | 59,1 | 99 |
| 60 | 58,8 | 59,0 | 59,3 | 59,0 | 99 |
| 80 | 59,3 | 59,0 | 59,3 | 59,2 | 99 |
| 100 | 59,0 | 59,0 | 59,0 | 59,0 | 99 |

Es zeigt sich, dass die Polymere A, B, C und D ausgezeichnete Inhibitionswirkung zeigen.

**Patentansprüche**

1. Verfahren zur Herstellung eines phosphorhaltigen Polymers die Schritte enthaltend

   (i) Copolymerisieren von zumindest

   (a) monoethylenisch ungesättigten Dicarbonsäureanhydriden mit 4 bis 6 C-Atomen mit
   (b) Olefinen der Formel $CH_2= C(R^1)R^2$, wobei
   $R^1$ H oder $CH_3$ und
   $R^2$ H, $CH_3$, $C_2H_5$ oder Phenyl ist, und
   (c) phosphorhaltigen Ethenderivaten der Formel $CH_2=CHX$, wobei X ein Phosphorsäurerest, ein Phosphonsäurerest, ein phosphorige Säure-Rest oder ein entsprechendes Salz oder entsprechender Ester ist;

   (ii) zumindest teilweise Ringöffnung der verbleibenden Anhydridgruppen.

2. Verfahren nach Anspruch 1, **dadurch gekennzeichnet, dass** das Olefin Isobuten, das Anhydrid Maleinsäureanhydrid und das phosphorhaltige Ethenderivat Vinylphosphonsäure, deren Salz oder Ester ist.

3. Verfahren nach Anspruch 1 oder 2, **dadurch gekennzeichnet, dass** das molare Verhältnis Anhydrid zu Olefin im Bereich von 20 : 1 bis 1 : 5 liegt.

4.  Verfahren nach einem der Ansprüche 1 bis 3, **dadurch gekennzeichnet, dass** die mittlere Molmasse $M_w$ des Polymers vor der zumindest teilweisen Ringöffnung der Anhydridgruppen im Bereich von 200 bis 25000 g/mol liegt.

5.  Verfahren nach einem der Ansprüche 1 bis 4, **dadurch gekennzeichnet, dass** die Menge an phosphorhaltigem Ethenderivat 0,01 bis 15 Gew.-% bezogen auf die Gesamtmenge des phosphorhaltigen Polymers beträgt.

6.  Phosphorhaltiges Polymer erhältlich aus dem Verfahren nach einem der Ansprüche 1 bis 5.

7.  Verfahren zur Vermeidung von Ba-/Sr-Kesselstein den Schritt enthaltend

    (a) Zuführen eines phosphorhaltigen Polymers nach Anspruch 6 zu einer Flüssigkeit, die geeignet ist, Ba-/Sr-Kesselstein abzuscheiden in einer Flüssigkeitsumgebung.

8.  Verfahren nach Anspruch 7, **dadurch gekennzeichnet, dass** das phosphorhaltige Polymer als Salz in einer wässrigen Lösung zugeführt wird.

9.  Verfahren nach Anspruch 7 oder 8, **dadurch gekennzeichnet, dass** die Flüssigkeit Wasser und/oder Erdöl und/oder Erdgas enthält.

10. Verfahren nach einem der Ansprüche 7 bis 9, **dadurch gekennzeichnet, dass** die Flüssigkeitsumgebung zum Aufbewahren, Erhitzen oder Abkühlen, Transport oder Fördern der Flüssigkeit oder als Lagerstätte der Flüssigkeit dient.

11. Verfahren nach Anspruch 10, **dadurch gekennzeichnet, dass** die Flüssigkeitsumgebung ein Kessel, eine Rohrleitung, ein Druckbehälter, eine Gesteinsformation, oder ein Produktions- und/oder Injektionsbohrloch für die Erdöl- oder Erdgasförderung ist oder Lagertanks oder Apparate in der Ölproduktion.

12. Verfahren nach einem der Ansprüche 7 bis 11, **dadurch gekennzeichnet, dass** das phosphorhaltige Polymer derart zugeführt wird, dass dieses eine Konzentration in der Flüssigkeit von höchstens 250 ppm (bezogen auf das Gewicht des Polymers und der Flüssigkeit) aufweist.

13. Verfahren nach einem der Ansprüche 7 bis 12, **dadurch gekennzeichnet, dass** die Flüssigkeitsumgebung ein Bohrloch ist und das phosphorhaltige Polymer am unteren Ende des Bohrlochs dosiert wird.

14. Verfahren nach einem der Ansprüche 7 bis 13, **dadurch gekennzeichnet, dass** die Flüssigkeitsumgebung eine Gesteinsformation ist und das phosphorhaltige Polymer zusammen mit dem Injektionswasser in die Formation verpresst wird.

15. Verfahren nach einem der Ansprüche 7 bis 14, **dadurch gekennzeichnet, dass** das phosphorhaltige Polymer durch eine Produktionsbohrung in eine Gesteinsformation verpresst wird (Squeeze-Treatment).

16. Verfahren nach einem der Ansprüche 1 bis 15, die weiteren Schritte enthaltend

    (b) Entnahme einer Probe aus der Flüssigkeitsumgebung das phosphorhaltige Polymer enthaltend und
    (c) Bestimmen des Phosphorgehaltes der Probe, gegebenenfalls nach Derivatisierung des phosphorhaltigen Polymers.

17. Verfahren nach Anspruch 16, **dadurch gekennzeichnet, dass** die Derivatisierung eine Oxidation des Phosphors in dem phosphorhaltigen Polymer und/oder gegebenenfalls eine Hydrolyse umfasst.

18. Verfahren nach Anspruch 16 oder 17, **dadurch gekennzeichnet, dass** das Bestimmen des Phosphorgehaltes mit Hilfe eines Molybdän-Blau-Testes oder der induktiv gekoppelten Plasma-Atomemissionsspektrometrie erfolgt.

**Claims**

1.  A process for preparing a phosphorus-containing polymer, comprising the steps of

    (i) copolymerizing at least

    (a) monoethylenically unsaturated dicarboxylic anhydrides having from 4 to 6 carbon atoms with
    (b) olefins of the formula $CH_2= C(R^1)R^2$ where
    $R^1$ is H or $CH_3$ and
    $R^2$ is H, $CH_3$, $C_2H_5$ or phenyl, and
    (c) phosphorus-containing ethene derivatives of the formula $CH_2=CHX$ where X is a phosphoric acid radical, a phosphonic acid radical, a phosphorous acid radical or a corresponding salt or corresponding ester;

    (ii) at least partly ring-opening the remaining anhydride groups.

2.  The process according to claim 1, wherein the olefin is isobutene, the anhydride is maleic anhydride and the phosphorus-containing ethene derivative is vinylphosphonic acid, or a salt or ester thereof.

3.  The process according to claim 1 or 2, wherein the molar ratio of anhydride to olefin is in the range from 20:1 to 1:5.

4.  The process according to any of claims 1 to 3, wherein the mean molar mass $M_w$ of the polymer before the at least partial ring-opening of the anhydride groups is in the range from 200 to 25 000 g/mol.

5.  The process according to any of claims 1 to 4, wherein the amount of phosphorus-containing ethene derivative is from 0.01 to 15% by weight based on the total amount of the phosphorus-containing polymer.

6.  A phosphorus-containing polymer obtainable from the process according to any of claims 1 to 5.

7.  A process for preventing Ba/Sr scale, comprising the step of

    (a) adding a phosphorus-containing polymer according to claim 6 to a liquid which is suitable for depositing Ba/Sr scale in a liquid environment.

8.  The process according to claim 7, wherein the phosphorus-containing polymer is added as a salt in an aqueous solution.

9.  The process according to claim 7 or 8, wherein the liquid comprises water and/or mineral oil and/or natural gas.

10. The process according to any of claims 7 to 9, wherein the liquid environment serves to store, heat or cool, transport or deliver the liquid, or as a deposit of the liquid.

11. The process according to claim 10, wherein the liquid environment is a tank, a pipeline, a pressure vessel, a rock formation, or a production and/or injection borehole for mineral oil or natural gas extraction, or storage tanks or apparatus in oil production.

12. The process according to any of claims 7 to 11, wherein the phosphorus-containing polymer is added in such a way that it has a concentration in the liquid of at most 250 ppm (based on the weight of the polymer and of the liquid).

13. The process according to any of claims 7 to 12, wherein the liquid environment is a borehole and the phosphorus-containing polymer is metered in at the lower end of the borehole.

14. The process according to any of claims 7 to 13, wherein the liquid environment is a rock formation and the phosphorus-containing polymer is pressed into the formation together with the injection water.

15. The process according to any of claims 7 to 14, wherein the phosphorus-containing polymer is pressed into a rock formation through a production borehole (squeeze treatment).

16. The process according to any of claims 1 to 15, comprising the further steps of

(b) withdrawing a sample from the liquid environment, comprising the phosphorus-containing polymer, and

(c) determining the phosphorus content of the sample, if appropriate after derivatizing the phosphorus-containing polymer.

**17.** The process according to claim 16, wherein the derivatization comprises an oxidation of the phosphorus in the phosphorus-containing polymer and/or if appropriate a hydrolysis.

**18.** The process according to claim 16 or 17, wherein the phosphorus content is determined with the aid of a molybdenum blue test or of inductively coupled plasma atomic emission spectrometry.

**Revendications**

**1.** Procédé pour la préparation d'un polymère phosphoré, comportant les étapes

(i) copolymérisation d'au moins

(a) des anhydrides d'acides dicarboxyliques à insaturation monoéthylénique, ayant de 4 à 6 atomes de carbone, avec
(b) des oléfines de formule $CH_2=C(R^1)\,R^2$,
$R^1$ étant H ou $CH_3$ et
$R^2$ étant H, $CH_3$, $C_2H_5$ ou phényle, et
(c) des dérivés phosphorés d'éthène de formule $CH_2=CHX$, X étant un reste d'acide phosphorique, un reste d'acide phosphonique, un reste d'acide phosphoreux ou un sel correspondant ou un ester correspondant ;

(ii) ouverture au moins partielle du cycle des groupes anhydride restants.

**2.** Procédé selon la revendication 1, **caractérisé en ce que** l'oléfine est l'isobutène, l'anhydride est l'anhydride maléique et le dérivé phosphore d'éthène est l'acide vinylphosphonique, un sel ou un ester de celui-ci.

**3.** Procédé selon la revendication 1 ou 2, **caractérisé en ce que** le rapport molaire de l'anhydride à l'oléfine se situe dans la plage de 20 : 1 à 1 : 5.

**4.** Procédé selon l'une quelconque des revendications 1 à 3, **caractérisé en ce que** la masse moléculaire moyenne $M_w$ du polymère avant l'ouverture au moins partielle du cycle des groupes anhydrides se situe dans la plage de 200 à 25 000 g/mole.

**5.** Procédé selon l'une quelconque des revendications 1 à 4, **caractérisé en ce que** la quantité du dérivé phosphoré d'éthène vaut de 0,01 à 15 % en poids, par rapport à la quantité totale du polymère phosphoré.

**6.** Polymère phosphoré pouvant être obtenu par le procédé selon l'une quelconque des revendications 1 à 5.

**7.** Procédé pour éviter les incrustations de Ba/Sr, comprenant l'étape

(a) addition d'un polymère phosphoré selon la revendication 6 à un liquide qui est susceptible de déposer des incrustations de Ba/Sr dans un environnement liquide.

**8.** Procédé selon la revendication 7, **caractérisé en ce que** le polymère phosphoré est ajouté sous forme de sel dans une solution aqueuse.

**9.** Procédé selon la revendication 7 ou 8, **caractérisé en ce que** le liquide contient de l'eau et/ou du pétrole et/ou du gaz naturel.

**10.** Procédé selon l'une quelconque des revendications 7 à 9, **caractérisé en ce que** l'environnement liquide sert au stockage, au chauffage ou au refroidissement, au transport ou à la circulation du liquide ou de gisement du liquide.

**11.** Procédé selon la revendication 10, **caractérisé en ce que** l'environnement liquide est une cuve, une conduite tubulaire, un récipient tenant la pression, une formation géologique, ou un trou de forage d'injection et/ou de production pour l'extraction de pétrole ou de gaz naturel ou consiste en des réservoirs ou appareils dans la production du pétrole.

**12.** Procédé selon l'une quelconque des revendications 7 à 11, **caractérisé en ce que** le polymère phosphoré est ajouté de manière à avoir une concentration dans le liquide d'au maximum 250 ppm (par rapport au poids du polymère et du liquide).

**13.** Procédé selon l'une quelconque des revendications 7 à 12, **caractérisé en ce que** l'environnement de liquide est un trou de forage et le polymère phosphoré est introduit par addition dosée à l'extrémité inférieure du trou de forage.

**14.** Procédé selon l'une quelconque des revendications 7 à 13, **caractérisé en ce que** l'environnement de liquide est une formation géologique et le polymère phosphoré est introduit sous pression, conjointement avec l'eau d'injection, dans la formation.

**15.** Procédé selon l'une quelconque des revendications 7 à 14, **caractérisé en ce que** le polymère phosphoré est introduit sous pression par un trou de forage de production dans une formation géologique (Squeeze-Treatment).

**16.** Procédé selon l'une quelconque des revendications 1 à 15, comprenant les étapes supplémentaires

(b) prélèvement d'un échantillon de l'environnement liquide, contenant le polymère phosphoré, et
(c) détermination de la teneur en phosphore de l'échantillon, éventuellement après transformation du polymère phosphoré en dérivé.

**17.** Procédé selon la revendication 16, **caractérisé en ce que** la transformation en dérivé comprend une oxydation du phosphore dans le polymère phosphoré et/ou éventuellement une hydrolyse.

**18.** Procédé selon la revendication 16 ou 17, **caractérisé en ce que** la détermination de la teneur en phosphore s'effectue à l'aide d'un test au bleu de molybdène ou de la spectrométrie d'émission atomique à plasma couplée par induction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4018702 A
- GB 1024725 A
- GB 1411063 A
- US 3810834 A
- US 4818795 A
- EP 0264627 A
- EP 0276464 B
- EP 0009171 B
- WO 9716464 A
- EP 479465 B
- US 4874535 A
- WO 2005000747 A
- US 6995120 B
- WO 2005001241 A
- WO 2008077829 A
- GB 2172278 A
- EP 2006063340 W
- EP 0106991 B